# EUROPEAN PATENT SPECIFICATION

(11) **EP 1 569 072 B1**
(45) Date of publication and mention of the grant of the patent: **04.04.2007**
(21) Application number: 04251048.7
(22) Date of filing: 26.02.2004
(51) Int. Cl.: G06F 3/023

(54) **Handheld electronic device having improved help facility and associated method**
Tragbares elektronisches Gerät mit einer Hilfsfunktion und entsprechendes Verfahren
Appareil électronique portatif ayant une fonction d'aide et méthode correspondante

(43) Date of publication of application: 31.08.2005
(73) Proprietor: Research In Motion Limited, Waterloo, Ontario N2L 3W8 (CA)
(72) Inventor: Brubacher-Cressman, Dale K, New Hamburg, Ontario N3A 1E4 (CA); Griffin,Jason Tyler, Waterloo, Ontario N2T 2J5 (CA)
(74) Representative: Hibbert, Juliet Jane Grace

(56) References cited:
- EP-A- 0 967 463
- EP-A- 1 033 644
- EP-A- 1 376 320

## Description

### BACKGROUND OF THE INVENTION

### Field of the Invention

The invention relates generally to handheld electronic devices and, more particularly, to a handheld electronic device that includes an improved help facility. The invention also relates to a method of providing help information on a handheld electronic device.

### Background Information

Numerous types of handheld electronic devices are known. Examples of such handheld electronic devices include, for instance, personal data assistants (PDAs), handheld computers, two-way pagers, cellular telephones, and the like. Such handheld electronic devices are generally intended to be portable and thus are relatively small. With advances in technology, handheld electronic devices are being configured to include greater numbers of features while having smaller form factors.

In order to provide a large number of functions in the limited space of a handheld electronic device, as well as for convenience and for other reasons, handheld electronic devices have been configured such that certain keys thereof can have associated therewith a plurality of functions. For instance, and without limitation, a certain application on the handheld electronic device might display a list of data, and the key <T> may be configured to, in some circumstances, provide the function of typing the letter "t", and may, in other circumstances, provide another function of moving a cursor to the top of the list. The function of moving the cursor to the top of the list provides a function in addition to the typical textual function of a key such as <T>, e.g., typing the letter "t", typing the letter "T", or typing a digit or a symbol. Such additional functions have sometimes been referred to as "hot key" functions or assignments. While such hot key assignments have been generally useful for their intended purposes, such hot key assignments are not without limitation.

With the number and complexity of applications on handheld electronic devices, many keys are configured to have a number of hot key assignments. A particular key could have a first hot key assignment that is activatable when a first portion of an application is active, and the same key could have a second, different hot key assignment that is activatable when a second portion of the same application is active. Moreover, a given key could simultaneously have multiple hot key assignments such as, for example, and without limitation, a first hot key function may be performed as a result of a press-and-release actuation of the key, and a second hot key function may be provided as a result of a press-and-hold actuation of the same key. Such large numbers of hot key assignments can be difficult for a user to remember. Moreover, the various hot key assignments can vary from application to application, can vary with different portions of a single application, and can vary with, for instance, the fashion in which the key is actuated. As a result, a user may have difficulty remembering the various hot key assignments, which is undesirable.

EP 1 033 644 A2 describes an application launcher for a two-way mobile communications device.

The mobile device includes a mechanism for, when the device is in a launch pad mode of operation, presenting an image map providing an indication on the display screen of resident applications and their assignments to existing navigation keys which are used as hot keys in that mode, whereby the user wishing to access a particular application only has to press the assigned navigation key.

### SUMMARY OF THE INVENTION

An improved handheld electronic device and associated method in accordance with the invention provide an improved help facility that displays a list of hot key assignments. The help facility is context-specific, meaning that it displays the hot key assignments that are activatable in the context of the specific portion of the specific application that is active on the handheld electronic device.

Accordingly, an aspect of the invention is to provide an improved handheld electronic device and method that provide an improved help facility that displays lists of hot key assignments that are activatable with respect to a specific portion of a specific application that is active on the handheld electronic device.

Another aspect of the invention is to provide an improved handheld electronic device and method that facilitate the use of hot key functions by providing an improved help facility that displays lists of hot key assignments that are currently operative.

Another aspect of the invention is to provide an improved handheld electronic device and method that avoid the need for a user to remember all of the various hot key assignments on the handheld electronic device.

The invention is set out in the accompanying claims.

### BRIEF DESCRIPTION OF THE DRAWINGS

A full understanding of the invention can be gained from the following Description, by way of example only, of the Preferred Embodiment when read in conjunction with the accompanying drawings in which:
Fig. 1 is a top plan view of an improved handheld electronic device in accordance with the invention;
Fig. 2 is a flowchart depicting a routine that is executed by a processor apparatus of the handheld electronic device of Fig. 1;
Fig. 3 is a first help screen depicted superimposed as an overlay on a home screen on a display of the handheld electronic device of Fig. 1;
Figs. 4-6 depict additional help screens;
Fig. 7 is a block diagram of the handheld electronic device of Fig. 1; and
Fig. 8 is a flowchart depicting a portion of a routine that is executed by the processor apparatus of the handheld electronic device of Fig. 1.

Similar numerals refer to similar parts throughout the specification.

### DESCRIPTION OF THE PREFERRED EMBODIMENT

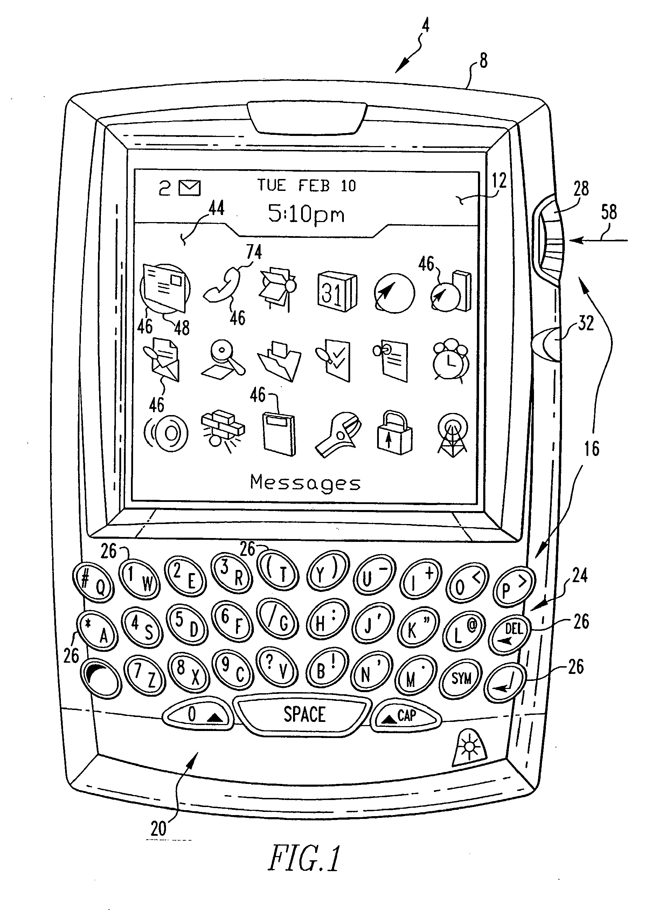

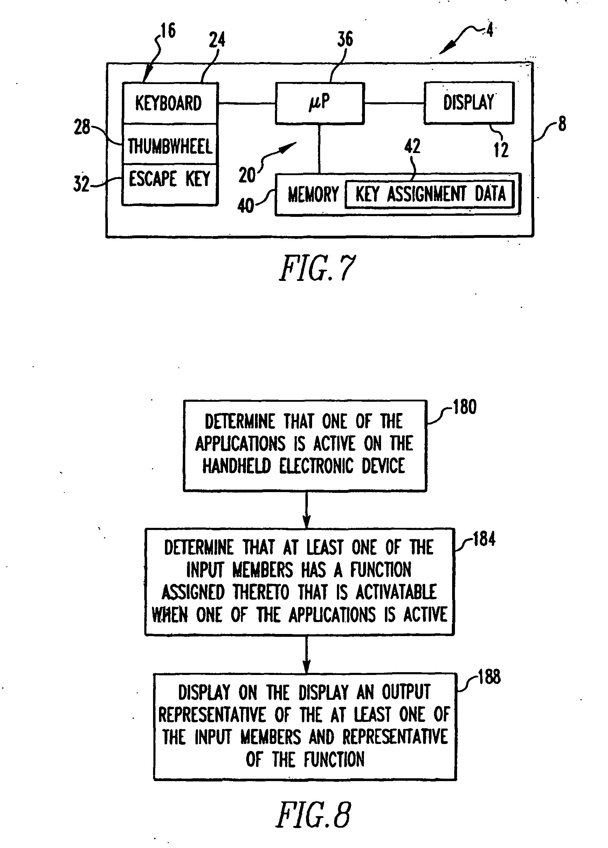

An improved handheld electronic device 4 is depicted in Figs. 1 and 7. The handheld electronic device 4 includes a housing 8, a display 12, an input apparatus 16, and a processor apparatus 20. The processor apparatus 20 is responsive to inputs received from the input apparatus 16 and to provide outputs to the display 12. Examples of handheld electronic devices are disclosed in U.S. Patent Nos. 6,452,588 and 6,489,950.

As can be understood from Fig. 1, the input apparatus 16 includes a keyboard 24 having a plurality of keys 26, a rotatable thumbwheel 28, and an escape key 32. The keys 26, the rotatable thumbwheel 28, and the escape key 32 are input members of the input apparatus 16, and each of the input members has a function assigned thereto. As used herein, the expression "function" and variations thereof can refer to any type of application program, process, task, procedure, routine, subroutine, function call, or other type of software or firmware operation that can be performed by the processor apparatus 20 of the handheld electronic device 4. As will be set forth in greater detail below, one or more of the input members of the input apparatus 16, such as one or more of the keys 26, has a hot key assignment that is activatable in at least one portion of at least one application to provide another predefined function on the handheld electronic device 4.

As is shown in Fig. 7, the processor apparatus 20 includes a processor 36 and a memory 40. The processor 36 can be, for example, and without limitation, a microprocessor (µP) or other type of processor. The memory 40 can include any combination of a wide variety of internal and external storage media including RAM, ROM, EPROM(s), EEPROM(s), and the like without limitation. Hot key assignment data 42 is stored in the memory 40 and represents a number of hot key assignment data elements. As used herein, the expression "a number of" and variations thereof shall refer broadly to any non-zero quantity, including a quantity of one.

In Fig. 1, the display 12 is depicted as displaying a home screen 44 that includes a number of applications 46 depicted as discrete icons, including an icon representing an e-mail application 48. In Fig. 1, the home screen 44 is currently active and would constitute an application. One of the other applications 46, such as the e-mail application 48, can be initiated from the home screen by providing an input through the input apparatus 16, such as by rotating the thumbwheel 28 and providing a selection input by translating the thumbwheel 28 in the direction indicated by the arrow 58 in Fig. 1.

The help facility can be initiated in any of a variety of fashions. For example, and without limitation, the help facility could be initiated by accessing it as a menu option with the thumbwheel 28, pressing an <ALT> key in combination with a <SPACE> key, pressing the <ALT> key in combination with the <RETURN> key, and the like, although other ways of initiating the help facility can be employed.

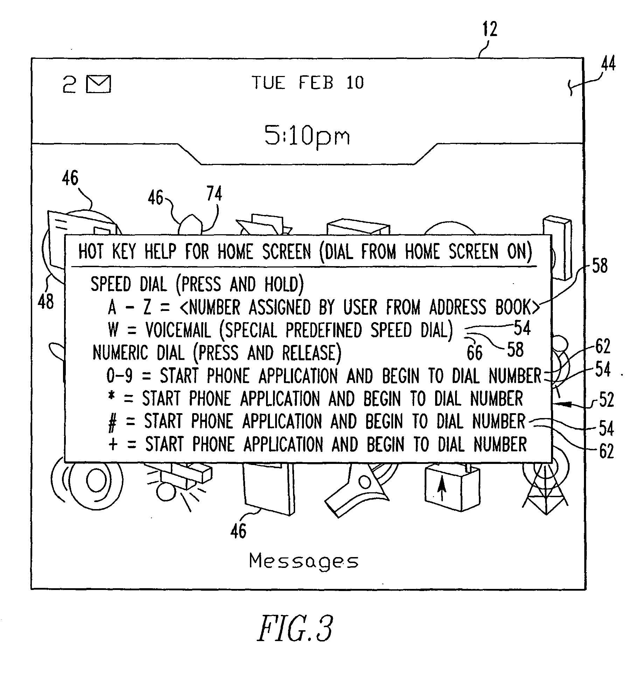

If the help facility is initiated from the home screen 44, a help screen 52, such as depicted in Fig. 3, is displayed as an overlay above whatever else is then being depicted on the display 12 which, in the present example, is the home screen 44. The overlay nature of the help screen 52 allows the display 12 to depict both the help screen 52 and a point of reference thereof, i.e., the home screen 44, simultaneously on the display 12, which is advantageous. As such, the display 12 displays both context-specific hot key assignment information, meaning that it displays in the help screen 52 the hot key assignments that are activatable in the context of the portion of the application that is active on the handheld electronic device 4, and also can depict the active application. It is understood, however, that the handheld electronic device 4 could be configured to provide the context-specific help screen 52 without providing any depiction of the active application without departing from the concept of the invention.

In the exemplary improved handheld electronic device 4, the home screen 44 has a processing option that, if activated, provides hot key assignments that allow a user to dial a telephone number by entering digits while the home screen 44 is active. If the processing option is not activated, then various keys 26 have various other hot key assignments.

Fig. 3 depicts the exemplary help screen 52 as an overlay above the home screen 44 when the home screen processing option of dialing from the home screen 44 has been activated. The help screen 52 includes a list of the various hot key functions 54 that are associated with the various keys 26 (Fig. 1) and that are activatable at that time, meaning that they are activatable when the home screen 44 is active.

As can further be seen from the help screen 52, some of the keys 26 (Fig. 1) have multiple hot key functions associated therewith depending upon the way the keys 26 are actuated. For instance, the help screen 52 depicts a plurality of press-and-hold hot key functions 58 and a plurality of press-and-release hot key functions 62. More specifically, and as an example, it can be seen from Fig. 1 that one of the keys 26 includes both the alphabetic character <W> as well as the numeric character <1>. The help screen 52 indicates that if this key is actuated in a press-and-hold fashion, i.e., in a fashion that will activate the press-and-hold hot key function 58 associated with that key, a voice-mail function 66 will be activated. On the other hand, if the aforementioned key 26 is actuated in a press-and-release fashion, i.e., in such a way as to activate the press-and-release hot key function 62 associated with such key 26, then the telephone application 74 would be initiated and the digit <1> would be entered into a dialing sequence.

It is understood that the hot key functions 54 can be provided in any one or more of a various fashions from the input members of the input apparatus 16. For instance, a hot key function 54 could be provided by a press-and-hold actuation of a key 26; a press-and-release actuation of a key 26; actuation of combinations of keys 26, such as when an actuation of a key 26 is combined with actuation of an <ALT> key or a <SHIFT> key or other key 26; by a combination of navigational inputs and selection inputs from the thumbwheel 28; combinations of these; and/or by other entries from the input apparatus 16.

By providing this particular help screen 52, the user is apprised of the hot key assignments that are activatable when the home screen 44 is active. The help screen 52 can also provide an indication to the user whether the processing option of dialing from the home screen has been activated. This saves time and promotes efficiency of use.

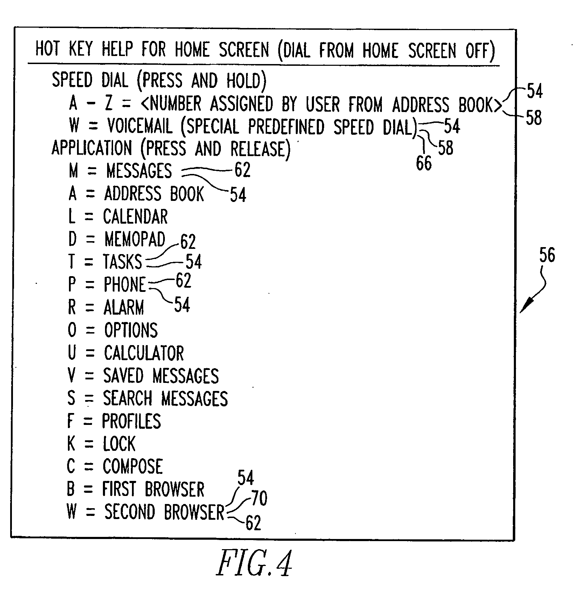

In the event that the processing option on the home screen 44 has not been selected, upon initiating the help facility the display 12 will provide an output such as the exemplary help screen 56 of Fig. 4 which would be provided as an overlay on the home screen 44 in a fashion similar to the help screen 52 depicted in Fig. 3. The help screen 56 of Fig. 4 indicates that a plurality of hot key functions 54 in the form of hot key assignments are active, including press-and-hold hot key functions 58 and press-and-release hot key functions 62. By way of further example, if the help screen 56 of Fig. 4 was displayed, a user could activate the voice-mail function 66 by actuating the <W> key in a press-and-hold fashion. However, the list of press-and-release hot key functions 62 is different than that of Fig. 3. Specifically, if a user actuated the <W> key in a press-and-release fashion, a second browser function 70 would be activated.

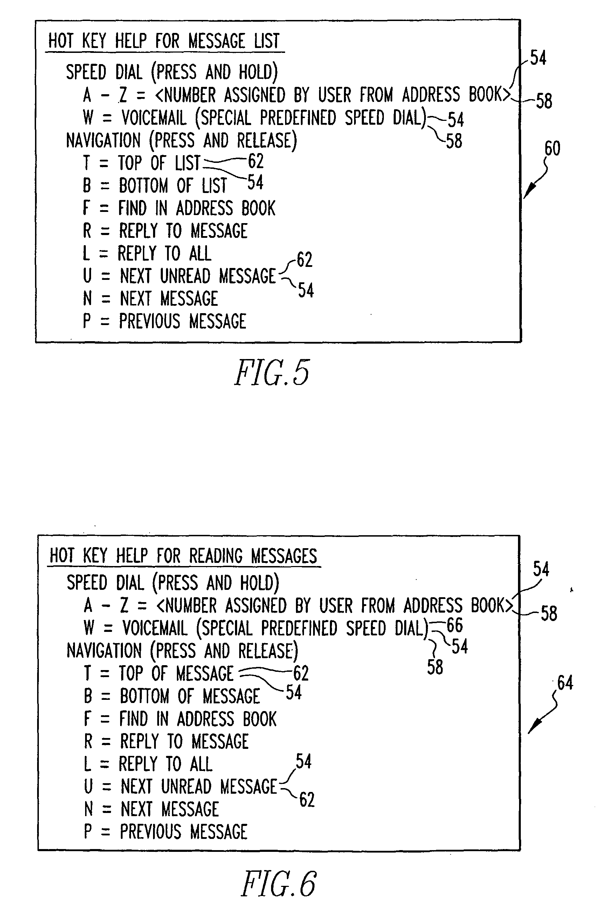

Figs. 5 and 6 depict the help screens 60 and 64, respectively, that would, for example, appear if the help facility were activated when the e-mail application 48 was active. More specifically, the help screen 60 of Fig. 5 would be displayed when a first portion of the e-mail application 48 was active, specifically the portion of the e-mail application 48 that provides a message list. The help screen 64 of Fig. 6 would be depicted when a second portion of the e-mail application 48 was active, specifically, a portion of the e-mail application 48 that lists the contents of a particular message. The help screens 60 and 64 would each be separately depicted on the display 12 as an overlay above the active portion of the e-mail application 48 that would be shown (but is not expressly depicted herein) on the display 12.

The help screen 60 of Fig. 5 indicates, for example, that if the key 26 having the alphabetic character <T> were activated in a press-and-release fashion, such actuation would initiate the hot key function 54 of displaying the top of the list of messages that is then being shown on the display 12. On the other hand, the help screen 64 of Fig. 6 indicates that if the key 26 having the alphabetic character <T> is activated during the portion of the e-mail application 48 wherein one reads the contents of a message, the cursor would be moved to the top of the message. It thus can be seen that a given key 26, such as the key 26 that includes the character <T> (Fig. 1), can have separate hot key assignments within separate portions of an application 46, in this example the e-mail application 48. Also, and as indicated above, a given key 26, such as the key 26 having the characters <W> and <1> (Fig. 1), can have a plurality of hot key assignments depending upon the way key 26 is actuated, i.e., such as by having both a press-and-hold hot key function 58 (Fig. 3) and a press-and-release hot key function 62. Moreover, and as it is indicated in Figs. 3 and 4 in the context of the key 26 having the alphabetic character <W> and the numeric character <1>, a given key 26 can have different hot key assignments depending upon whether or not a processing option has been selected. Despite the broad variety and large number of hot key assignments on the handheld electronic device 4, the handheld electronic device 4 and the associated method of the invention provide an advantageous help facility that depicts, in a context-specific fashion, the list of hot key assignments that are then activatable on the handheld electronic device 4 according to the specific portion of the specific application 46 that is then active. By depicting the current hot key assignments in the help screens, for example, 52, 56, 60, and 64, in the form of overlays, an additional point of reference as to the active portion of the active application 46 is provided to the user. It is understood that Figs. 3-6 depict only a small number of exemplary help screens, and that the handheld electronic device 4 likely would have many more help screens that are not expressly depicted herein.

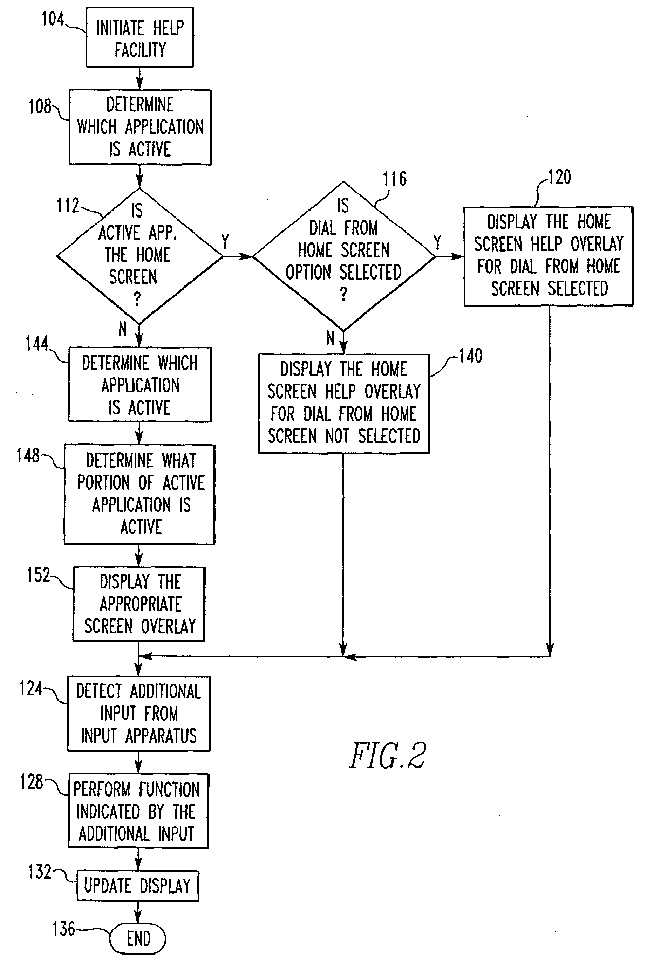

Fig. 2 depicts a flowchart of a routine that can be executed by the processor apparatus 20 of the handheld electronic device 4 to provide the help facility. A user would initiate at 104 the help facility such as by actuating a particular key, entering a particular key sequence, or performing some other operation. The processor apparatus 20 would then determine at 108 which of the applications 46 was presently active. The processor apparatus 20 would determine at 112 whether the active application 46 was the home screen 44. If the home screen 44 was active, then the processor apparatus 20 would then detect at 116 whether the processing option of dialing from the home screen had been activated. If the dial from home processing option was selected, then the processor apparatus 20 would display at 120 the help screen 52 that is depicted in Fig. 3. In this regard, the processor 36 preferably would access the memory 40 (Fig. 7) to ascertain the hot key assignment data 42 that was activatable and would send an appropriate signal to the display 12 to display the help screen 52 as an overlay on top of the home screen 44.

Upon displaying at 120 the indicated help screen 52, the processor apparatus 20 would then be enabled to detect at 124 additional input from the input apparatus 16. The input might be, for instance, a press-and-hold actuation or a press-and-release actuation of one of the keys 26. Alternatively, the processor might detect an input in the form of a rotation of the thumbwheel 28, which might move a cursor (not expressly depicted) about the help screen 52 or among the applications 46 for possible selection with a selection input. The additional input might also be a cancellation operation that terminates the help facility. Such a cancellation operation could be initiated by, for example, and without limitation, a detection by the processor apparatus 20 of an actuation of an <ESCAPE> key, or other appropriate entry. The handheld electronic device 4 may also generate internally an additional input in the form of a termination signal that could be generated after the expiration of a predetermined time parameter and that would terminate the help facility.

The additional input detected at 124 will be associated by the processor apparatus 20 with one of the hot key functions 54. The processor apparatus 20 would then perform at 128 the associated hot key function 54 that is indicated by the additional input. In this regard, an additional input that does not have a hot key assignment associated therewith could either be ignored by the handheld electronic device 4 or could serve as a signal to terminate the help facility, or could be otherwise employed.

The hot key function performed at 128 will preferably employ an update of the display 12, which is performed at 132. Such an updating at 132 might include restoring the display 12 to its original condition without a help screen, or may display something representative of the hot key function 54 associated with the additional input that was detected at 124. Upon updating the display at 132, the help facility would end at 136.

If the processor apparatus 20 detected at 116 that the processing option of dialing from the home screen 44 had not been activated, then the processor apparatus 20 would send a signal to the display 12 to display at 140 the help screen 56 of Fig. 4. This operation preferably would also cause the processor 36 to access the memory 40 to access the hot key assignment data 42 that would indicate the hot key assignments that were then operative. Processing then would continue at 124.

If it is determined at 112 that the home screen 44 is not active, then the processor apparatus would then detect at 144 which of the applications 46 was active. This may be obtained, for instance, and without limitation, from a state table, from a task table, from the logical flow of operations within the source code, and/or from other aspects of the operating system. The processor apparatus 20 would then determine at 148 which portion of the active application 46 was then active on the handheld electronic device 4. This likewise may be obtained, for instance, and without limitation, from a state table, from a task table, from the logical flow of operations within the source code, and/or from other aspects of the operating system. The processor apparatus 20 could then, for instance, and without limitation send a signal to the active application to have it provide the help information to the display 12, or, the processor apparatus 20 could, without limitation, interrogate the memory 40 to obtain the help information and cause a signal to be sent to the display 12 to display at 152 the appropriate help screen in the form of an overlay, or other processing could provide the help information. Processing would then continue at 124 as indicated above.

The improved handheld electronic device 4 and associated method thus can be seen to provide an improved help facility that provides help information to a user in the form of a number of help screens that depict context-specific information as to the hot key assignments that are then operative.

A flowchart depicting a portion of the improved method in accordance with the invention is depicted in Fig. 8. The improved method would include determining at 180 that one of the applications 46 is active on the handheld electronic device 4, determining at 184 that at least one of the input members, such as one of the keys 26 (Fig. 1), has a hot key function assigned thereto that is activatable when the aforementioned application 46 is active, and displaying at 188 on the display 12 an output representative of the at least one of the input members and representative of the assigned hot key function.

While specific embodiments of the invention have been described in detail, by way of example only, it will be appreciated by those skilled in the art that various modifications and alternatives to those details could be developed within the scope of the invention.

## Claims

1. A method of providing information about a handheld electronic device, the handheld electronic device (4) including a display (12), an input apparatus (1) having a number of input members (26), and a number of applications (46), at least one of said input members having a function assigned thereto, said method comprising:
determining that one of said applications is active on said handheld electronic device;
determining that a first portion of said one of said applications is active on the handheld electronic device;
determining that said at least one of said input members has a first alternate function (58) assigned thereto that is activatable when said first portion of said one of said applications is active;
determining that said at least one of said input members has a second alternate function (62) assigned thereto that is activatable when said first portion of said one of said applications is active; and
determining that said first alternate function is activatable by a press-and-hold actuation of said at least one of said input members; determining that said second alternate function is activatable by a press-and-release actuation of said at least one of said input members; and displaying on the display an output (60, 64) representative of said press-and-hold actuation and said press-and-release actuation, the output being a help facility that depicts the input member assignments that are activatable according to the portion of the application that is active.

2. The method of Claim 1 further comprising determining that a second portion of said one of said applications has become active on the handheld electronic device; and determining that said first alternate or said second alternate function has become a different function that is activatable when said second portion of said one of said applications is active.

3. The method of any preceding Claim further comprising displaying a screen from said one of said applications; and displaying said output as an overlay above said screen.

4. The method of any preceding Claim further comprising detecting an input from said input apparatus; and performing an operation indicated by said detected input; said detected input being one of:
an input from said at least one of said input members;
a navigational input and a selection input from said input apparatus; and
an <ESCAPE> input from said input apparatus.

5. The method of Claim 4 further comprising, responsive to said detected input, updating the display.

6. A handheld electronic device (4) comprising:
a display (12);
an input apparatus (16) including a number of input members (26), at least one of said input members having a function assigned thereto; and
a processor apparatus (8) including memory (44) and a number of applications (46), said processor apparatus being adapted to detect input from said input apparatus and to provide output signals to said display,
said processor apparatus being adapted to determine that one of said applications is active on said handheld electronic device, to determine that a first portion of said one of said applications is active on said handheld electronic device, to determine that said at least one of said input members has a first alternate function (58) assigned thereto that is activatable when said first portion of said one of said applications is active, to determine that said at least one of said input members has a second alternate function (62) assigned thereto that is activatable when said first portion of said one of said applications is active, to determine that said first alternate function is activatable by a press-and-hold actuation of said at least one of said input members, to determine that said second alternate function is activatable by a press-and-release actuation of said at least one of said input members, and to display on said display an output (60, 64) representative of said press-and-hold actuation and said press-and-release actuation, the output being a help facility that depicts the input member assignments that are activatable according to the portion of the application that is active.

7. The handheld electronic device of Claim 6 wherein said processor apparatus is further adapted to determine that a second portion of said one of said applications has become active on said handheld electronic device and to determine that said first alternate or said second alternate function has become a different function that is activatable when said second portion of said one of said applications is active.

8. The handheld electronic device of Claim 6 or 7 wherein said processor apparatus is further adapted to display a screen from said one of said applications and display said output as an overlay above said screen.

9. The handheld electronic device of any of Claims 6 to 8 wherein said processor apparatus is further adapted to detect an input from said input apparatus and to perform an operation indicated by said detected input, said detected input being one of:
an input from said at least one of said input members;
a navigational input and a selection input from said input apparatus; and
an <ESCAPE> input from said input apparatus.

10. The handheld electronic device of Claim 9 wherein said processor apparatus is further adapted to update the display responsive to said detected input.

## Patentansprüche

1. Verfahren zum Bereitstellen von Informationen über eine tragbare elektronische Vorrichtung, wobei die tragbare elektronische Vorrichtung (4) eine Anzeigeeinrichtung (12), eine Eingabeeinrichtung (1), die eine Anzahl von Eingabeelementen (26) aufweist, und eine Anzahl von Anwendungen (46) umfasst, wobei wenigstens eines der Eingabeelemente eine diesem zugeordnete Funktion aufweist, wobei das Verfahren umfasst:
Bestimmen, dass eine der Anwendungen auf der tragbaren elektronischen Vorrichtung aktiv ist,
Bestimmen, dass ein erster Teil der einen der Anwendungen auf der tragbaren elektronischen Vorrichtung aktiv ist,
Bestimmen, dass das wenigstens eine der Eingabeelemente eine erste alternative Funktion (58) aufweist, welche diesem zugeordnet ist, die aktivierbar ist, wenn der erste Teil der einen der Anwendungen aktiv ist,
Bestimmen, dass das wenigstens eine der Eingabeelemente eine zweite alternative Funktion (62) aufweist, welche diesem zugeordnet ist, die aktivierbar ist, wenn der erste Teil der einen der Anwendungen aktiv ist, und
Bestimmen, dass die erste alternative Funktion durch eine Drück-und-Halte-Betätigung des wenigstens einen der Eingabeelemente aktivierbar ist, Bestimmen, dass die zweite alternative Funktion durch eine Drück-und-Freigabe-Betätigung des wenigstens einen der Eingabeelemente aktivierbar ist, und Anzeigen einer zu der Drück-und-Halte-Betätigung und der Drück-und-Freigabe-Betätigung repräsentativen Ausgabe (60, 64) auf der Anzeigeeinrichtung, wobei die Ausgabe eine Hilfsfunktion ist, welche die Eingabeelementzuordnungen, die gemäß dem Teil der Anwendung, welcher aktiv ist, aktivierbar sind, darstellt.

2. Verfahren nach Anspruch 1, weiterhin umfassend ein Bestimmen, dass ein zweiter Teil der einen der Anwendungen auf der tragbaren elektronischen Vorrichtung aktiv geworden ist, und Bestimmen, dass die erste alternative oder die zweite alternative Funktion eine unterschiedliche Funktion geworden ist, die aktivierbar ist, wenn der zweite Teil der einen der Anwendungen aktiv ist.

3. Verfahren nach einem der vorhergehenden Ansprüche, weiterhin umfassend ein Anzeigen einer Darstellung von der einen der Anwendungen und Anzeigen der Ausgabe als eine Überlagerung über die Abbildung.

4. Verfahren nach einem der vorhergehenden Ansprüche, weiterhin umfassend ein Erfassen einer Eingabe von der Eingabeeinrichtung und Durchführen einer Betätigung, welche durch die erfasste Eingabe angezeigt wird, wobei die erfasste Eingabe:
eine Eingabe von dem wenigstens einen der Eingabeelemente oder
eine Navigationseingabe und eine Auswahleingabe von der Eingabeeinrichtung oder
eine Eingabe <ESCAPE> von der Eingabeeinrichtung ist.

5. Verfahren nach Anspruch 4, weiterhin umfassend ein Aktualisieren der Anzeigeeinrichtung in Antwort auf die erfasste Eingabe.

6. Tragbare elektronische Vorrichtung (4), umfassend:
eine Anzeigeeinrichtung (12),
eine Eingabeeinrichtung (16), die eine Anzahl von Eingabeelementen (26) umfasst, wobei wenigstens eines der Eingabeelemente eine diesem zugeordnete Funktion aufweist, und
eine Prozessoreinrichtung (8), die einen Speicher (44) und
eine Anzahl von Anwendungen (46) umfasst, wobei die Prozessoreinrichtung geeignet ist, eine Eingabe von der Eingabeeinrichtung zu erfassen und der Anzeigeeinrichtung Ausgabesignale bereitzustellen,
wobei die Prozessoreinrichtung geeignet ist, zu bestimmen, dass eine der Anwendungen auf der tragbaren elektronischen Vorrichtung aktiv ist, zu bestimmen, dass ein erster Teil der einen der Anwendungen auf der tragbaren elektronischen Vorrichtung aktiv ist, zu bestimmen, dass das wenigstens eine der Eingabeelemente eine erste alternative Funktion (58) aufweist, welche diesem zugeordnet ist, die aktivierbar ist, wenn der erste Teil der einen der Anwendungen aktiv ist, zu bestimmen, dass das wenigstens eine der Eingabeelemente eine zweite alternative Funktion (62) aufweist, welche diesem zugeordnet ist, die aktivierbar ist, wenn der erste Teil der einen der Anwendungen aktiv ist, zu bestimmen, dass die erste alternative Funktion durch eine Drück-und-Halte-Betätigung des wenigstens einen der Eingabeelemente aktivierbar ist, zu bestimmen, dass die zweite alternative Funktion durch eine Drück-und-Freigabe-Betätigung des wenigstens einen der Eingabeelemente aktivierbar ist, und eine zu der Drück-und-Halte-Betätigung und der Drück-und-Freigabe-Betätigung repräsentative Ausgabe (60, 64), auf der Anzeigeeinrichtung anzuzeigen, wobei die Ausgabe eine Hilfsfunktion ist, welche die Eingabeelementzuordnungen, die gemäß dem Teil der Anwendung, welcher aktiv ist, aktivierbar sind, darstellt.

7. Tragbare elektronische Vorrichtung nach Anspruch 6, wobei die Prozessoreinrichtung weiterhin geeignet ist, zu bestimmen, dass ein zweiter Teil der einen der Anwendungen auf der tragbaren elektronischen Vorrichtung aktiv geworden ist, und zu bestimmen, dass die erste alternative oder die zweite alternative Funktion eine unterschiedliche Funktion geworden ist, die aktivierbar ist, wenn der zweite Teil der einen der Anwendungen aktiv ist.

8. Tragbare elektronische Vorrichtung nach Anspruch 6 oder 7, wobei die Prozessoreinrichtung weiterhin geeignet ist, eine Darstellung von der einen der Anwendungen anzuzeigen und die Ausgabe als eine Überlagerung über die Darstellung anzuzeigen.

9. Tragbare elektronische Vorrichtung nach einem der Ansprüche 6 bis 8, wobei die Prozessoreinrichtung weiterhin geeignet ist, eine Eingabe von der Eingabeeinrichtung zu erfassen und eine Betätigung durchzuführen, welche durch die erfasste Eingabe angezeigt ist, wobei die erfasste Eingabe:
eine Eingabe von dem wenigstens einen der Eingabeelemente oder
eine Navigationseingabe und eine Auswahleingabe von der Eingabeeinrichtung oder
eine Eingabe <ESCAPE> von der Eingabeeinrichtung ist.

10. Tragbare elektronische Vorrichtung nach Anspruch 9, wobei die Prozessoreinrichtung weiterhin geeignet ist, die Anzeigeeinrichtung in Antwort auf die erfasste Eingabe zu aktualisieren.

## Revendications

1. Procédé de fourniture d'informations sur un dispositif électronique portatif, le dispositif électronique portatif (4) comprenant un élément d'affichage ou écran (12), un appareil d'entrée (1) ayant un certain nombre d'éléments d'entrée (26), et un certain nombre d'applications (46), au moins un desdits éléments d'entrée ayant une fonction qui lui est affectée, ledit procédé comprenant :
la détermination qu'une desdites applications est active sur ledit dispositif électronique portatif ;
la détermination qu'une première partie de ladite une desdites applications est active sur le dispositif électronique portatif ;
la détermination que ledit au moins un desdits éléments d'entrée a une première fonction alternée (58) qui lui est affectée qui peut être activée lorsque ladite première partie de ladite une desdites applications est active ;
la détermination que ledit au moins un desdits éléments d'entrée a une deuxième fonction alternée (62) qui lui est affectée qui peut être activée lorsque ladite première partie de ladite une desdites applications est active ; et
la détermination que ladite première fonction alternée peut être activée par un actionnement par pression continue dudit au moins un desdits éléments d'entrée ; la détermination que ladite deuxième fonction alternée peut être activée par un actionnement par brève pression dudit au moins un desdits éléments d'entrée ; et l'affichage sur l'écran d'une sortie (60, 64) représentative dudit actionnement par pression continue et dudit actionnement par brève pression, la sortie étant une fonction d'aide qui représente les affectations des éléments d'entrée qui peuvent être activées selon la partie de l'application qui est active.

2. Procédé selon la revendication 1, comprenant en outre la détermination qu'une deuxième partie de ladite une desdites applications est devenue active sur le dispositif électronique portatif ; et la détermination que ladite première ou ladite deuxième fonction alternée est devenue une fonction différente qui peut être activée lorsque ladite deuxième partie de ladite une desdites applications est active.

3. Procédé selon l'une quelconque des revendications précédentes, comprenant en outre l'affichage d'un écran de ladite une desdites applications ; et l'affichage de ladite sortie sous forme de superposition par-dessus ledit écran.

4. Procédé selon l'une quelconque des revendications précédentes, comprenant en outre la détection d'une entrée à partir dudit appareil d'entrée; et l'exécution d'une opération indiquée par ladite entrée détectée; ladite entrée détectée étant l'une parmi :
une entrée à partir dudit au moins un desdits éléments d'entrée ;
une entrée de navigation et une entrée de sélection à partir dudit appareil d'entrée; et
une entrée <ÉCHAPPEMENT> à partir dudit appareil d'entrée.

5. Procédé selon la revendication 4, comprenant en outre, en réponse à ladite entrée détectée, la mise à jour de l'écran.

6. Dispositif électronique portatif (4) comprenant :
un écran (12) ;
un appareil d'entrée (16) comprenant un certain nombre d'éléments d'entrée (26), au moins un desdits éléments d'entrée ayant une fonction qui lui est affectée ; et
un appareil de traitement (8) comprenant une mémoire (44) et un certain nombre d'applications (46), ledit appareil de traitement étant conçu pour détecter l'entrée à partir dudit appareil d'entrée et pour fournir des signaux de sortie audit écran,
ledit appareil de traitement étant conçu pour déterminer qu'une desdites applications est active sur le dispositif électronique portatif, pour déterminer qu'une première partie de ladite une desdites applications est active sur ledit dispositif électronique portatif, pour déterminer que ledit au moins un desdits éléments d'entrée a une première fonction alternée (58) qui lui est affectée qui peut être activée lorsque ladite première partie de ladite une desdites applications est active, pour déterminer que ledit au moins un desdits éléments d'entrée a une deuxième fonction alternée (62) qui lui est affectée qui peut être activée lorsque ladite première partie de ladite une desdites applications est active, pour déterminer que ladite première fonction alternée peut être activée par un actionnement par pression continue dudit au moins un desdits éléments d'entrée, pour déterminer que ladite deuxième fonction alternée peut être activée par un actionnement par brève pression dudit au moins un desdits éléments d'entrée, et pour afficher sur ledit écran une sortie (60, 64) représentative dudit actionnement par pression continue et dudit actionnement par brève pression, la sortie étant une fonction d'aide qui représente les affectations des éléments d'entrée qui peuvent être activées en fonction de la partie de l'application qui est active.

7. Dispositif électronique portatif selon la revendication 6, dans lequel ledit appareil de traitement est en outre conçu pour déterminer qu'une deuxième partie de ladite une desdites applications est devenue active sur ledit dispositif électronique portatif et pour déterminer que ladite première ou ladite deuxième fonction alternée est devenue une fonction différente qui peut être activée lorsque ladite deuxième partie de ladite une desdites applications est active.

8. Dispositif électronique portatif selon la revendication 6 ou 7, dans lequel ledit appareil de traitement est en outre conçu pour afficher un écran de l'une desdites applications et afficher ladite sortie sous forme de superposition par-dessus ledit écran.

9. Dispositif électronique portatif selon l'une quelconque des revendications 6 à 8, dans lequel ledit appareil de traitement est en outre conçu pour détecter une entrée à partir dudit appareil d'entrée et pour exécuter une opération indiquée par ladite entrée détectée, ladite entrée détectée étant l'une parmi :
une entrée à partir dudit au moins un desdits éléments d'entrée ;
une entrée de navigation et une entrée de sélection à partir dudit appareil d'entrée ; et
une entrée <ÉCHAPPEMENT> à partir dudit appareil d'entrée.

10. Dispositif électronique portatif selon la revendication 9, dans lequel ledit appareil de traitement est en outre conçu pour mettre à jour l'écran en réponse à ladite entrée détectée.
